# EUROPÄISCHE PATENTANMELDUNG

(11) **EP 1 609 592 A1**
(43) Veröffentlichungstag der Anmeldung: **28.12.2005**
(21) Anmeldenummer: 05013339.6
(22) Anmeldetag: 21.06.2005
(51) Int. Cl.: B32B 27/00, B65D 65/40

(54) **Tubenbehälter**

(30) Priorität: 22.06.2004 CH 10482004
(71) Anmelder: Bösch, Karl, 4202 Duggingen (CH); Bösch, Erika, 4202 Duggingen (CH)
(72) Erfinder: Bösch, Karl, 4202 Duggingen (CH); Bösch, Erika, 4202 Duggingen (CH)
(74) Vertreter: Braun, André jr.

(57) **Zusammenfassung**

Der Tubenbehälter besteht aus einem Verbundmaterial aus Kunststofffolien und Karton und ist mit Pressrillen (3) versehen, die sich entlang von Mantellinien der Hülle (2) als Sollfaltlinien erstrecken. Zu seiner Herstellung werden an einem zugeschnittenen Verbundwerkstoffstück parallel zu den Seitenkanten wenigstens zwei Pressrillen (3) angebracht und das Verbundwerkstoffstück zu einer rohrförmigen Hülle (2) geformt und verschweisst. An deren einem Ende wird ein Schulterstück (4) mit einer Entnahmeöffnung (5) eingesiegelt, das andere Ende wird durch Zusammenpressen so flach gedrückt, dass von jedem Ende des Siegelstreifens eine Presslinie ausgeht.

## Beschreibung

Die Erfindung betrifft einen deformierbaren Tubenbehälter mit einer rohrförmigen Hülle und einer Stirnwand mit einer Entnahmeöffnung für halbflüssige und pastöse Produkte, insbesondere für Lebensmittel, und ein Verfahren zu seiner Herstellung.

Um halbflüssige und pastöse, in einer Verpackung befindliche Produkte artgerecht handhaben zu können, müssen spezielle Anforderungen an das Verpackungsmaterial und die Ausgestaltung der Verpackung erfüllt sein. Dies gilt vor allem für Lebensmittel, die über längere Zeiträume geschützt und in einwandfreiem Zustand in der Verpackung aufbewahrt und portionenweise aus ihr entnommen werden. Wegen der fehlenden Fliesseigenschaften sind spezielle Anforderungen erforderlich, um diese Bedürfnisse erfüllen zu können. Die relativ lange Verweilzeit in der Verpackung und das mehrfache Öffnen und Schliessen erfordert eine Reihe zusätzlicher Eigenschaften solcher Verpackungen.

Für eine grosse Zahl von Produkten, die portionenweise entnommen werden, gilt seit langem die Tube als bevorzugte Verpackungsform. Tuben werden aus verschiedenen Materialien hergestellt.

Tuben aus Metallfolien - früher meist aus Zinn, später vor allem aus Aluminium - werden seit über 150 Jahren für die Verpackung pastöser Produkte, z.B. Farben, Lacke, Zahnpasten und Lebensmittel verwendet. Sie haben den Vorteil, dass eine portionenweise Entnahme ohne Gefahr von Kontaminierung durch Lufteinsaugung auch über grössere Zeiträume möglich ist. Ein weiterer Vorteil von Metalltuben besteht darin, dass sie licht- und gasundurchlässig sind und so das Produkt vor äusseren Einflüssen schützen. Ihre aufwendige Herstellung, die hohen Materialkosten, fehlender Thermoschutz gegen Wärmeeinflüsse und die fehlende Elastizität tragen dazu bei, dass Metalltuben in der Vergangenheit grosse Marktanteile verloren haben und noch verlieren werden.

Kunststofftuben sind wegen ihrer ungenügenden Barriereneigenschaft und dem unerwünschten Rücksaugeffekt für Lebensmittelprodukte weniger geeignet. Ausserdem verwehren ihnen ihre Weichheit und die Zuordnung in den Kosmetik- und den Dentalsektor den Zugang in den Lebensmittelbereich.

Bei der Verwendung von dickwandigen Materialien besteht das Problem, dass der Tubenkörper zu wenig flexibel ist und sich nach dem Zusammenpressen in die Rundform zurückbildet und auf diese Weise Umgebungsluft einsaugt, so dass das Produkt mit Umgebungsluft kontaminiert wird.

Beuteltuben sind Flachbeutel mit einem Ausguss, dünnwandig und mit Siegelnähten an jeder Längsseite. Sie haben einen sehr begrenzten Füllbereich. Beuteltuben sind eine Weiterentwicklung der Standbodenbeutel und enthalten üblicherweise eine auf einmal zu entnehmende Portion. Im Verhältnis zu ihrem Füllvolumen sind sie relativ teuer in der Herstellung.

Bei vielen Folien- und Beuteltuben besteht auch das Problem, dass sich der Tubenkörper beim Auspressen des Füllguts so deformiert, dass sich das Füllgut im Behälter nach hinten verschiebt. Das Problem besteht insbesondere dann, wenn es sich bei der Tubenhülle um dünnwandiges und weiches Folienmaterial handelt.

Aus einigen der eingangs genannten Gründen ist es vorteilhaft, Tuben für pastöse und halbflüssige Produkte aus Materialien herzustellen die eine höhere Stabilität aufweisen und sich dennoch leicht zusammenpressen lassen. Im weiteren ist es wünschbar, Tuben für pastöse und halbflüssige Lebensmittel auch für grössere Inhaltsmengen und mit einem Thermoschutzmaterial herzustellen, um Lebensmittelprodukte gegen wechselnde Kälte- und Wärmeeinwirkung und möglicher Kondensatbildung zu schützen.

Der Erfindung liegt die Aufgabe zugrunde, einen Tubenbehälter der eingangs genannten Art so zu verbessern, dass er die Nachteile der bekannten Behälter nicht aufweist.

Erfindungsgemäss wird dies dadurch erreicht, dass der Tubenbehälter aus einem Verbundmaterial aus Kunststofffolien und Karton als Zwischenlage besteht und mit Pressrillen versehen ist, die sich entlang von Mantellinien der Hülle als Sollfaltlinien erstrecken.

Die Herstellung eines derartigen Tubenbehälters umfasst die im Anspruch 2 genannten Verfahrenschritte.

Dort wo die Pressrillen angebracht worden sind, wird die Rückstellkraft des zylindrisch gebogenen Materials abgebaut, damit die Biegekraft und die Rückstellkraft gleich gross sind. Damit lässt sich der Tubenkörper, obwohl er aus stabilem Verpackungsmaterial besteht, bequem zusammenpressen ohne dass er zurückfedert. Diese Lösung ermöglicht die Verwendung von erneuerbaren Verpackungsmaterialien für Tubenbehälter und damit lassen sich auch grössere und wirtschaftlichere Einheiten herstellen.

Im folgenden wird anhand der beiliegenden Zeichnung ein bevorzugtes Ausführungsbeispiel der Erfindung beschrieben. Es zeigen
die Fig. 1 einen Längsschnitt durch eine unten offene, also zum Einfüllen bereite Tube aus Verbundmaterial und
die Fig. 2 einige mögliche Formen von als Sollfaltlinien dienenden Pressrillen.

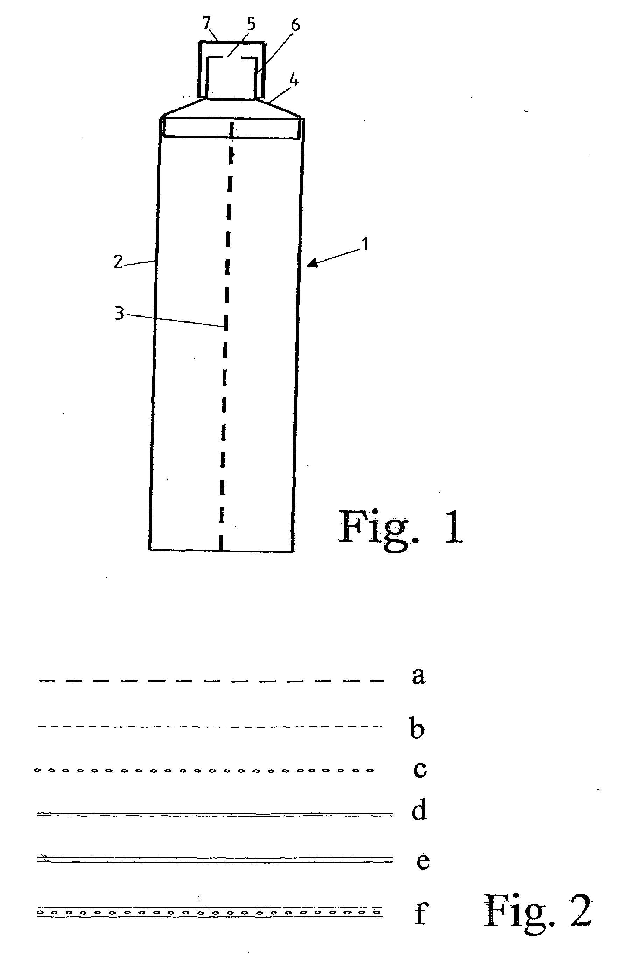

Der in der Fig. 1 dargestellte, leere, unten offene, als ganzes mit 1 bezeichnete Tubenbehälter besteht aus einer rohrförmigen Hülle 2 und einem Schulterstück 4. Dieses weist einen die Entnahmeöffnung 5 bildenden Ausslassstutzen 6 auf, der seinerseits, wie das bei Tubenbehältern üblich ist, durch eine aufschraubbare Kappe 7 verschlossen wird.

Erfindungsgemäss besteht wenigstens die rohrförmige Hülle 2 aus flexiblem, mehrschichtigem, Karton enthaltendem, also thermoisolierend wirkendem Verbundmaterial, vorzugsweise aus solchem, bei welchem eine Kartonschicht beidseits mit einer Kunststofffolie überzogen ist, also einem Material wie es zur Herstellung von Getränkepackungen bekannt ist. Die rohrförmige Hülle 2 weist mindestens zwei einander gegenüber angeordnete Pressrillen auf, die als Soll-Faltlinien dienen und von denen in der Schnittzeichnung der Figur 1 nur die eine mit 3 bezeichnete dargestellt ist.

Die Pressrillen, die auf einer oder auf beiden Seiten des Verbundmaterials angebracht sein können, dienen als Soll-Faltlinien und geben dem Verpackungskörper in Längsrichtung die für die Behältergrösse und die entsprechend der Viskosität des Füllgutes erforderliche Flexibilität, so dass die rohrförmige Hülle beim Auspressen einerseits in ihrer gepressten Form verharrt, sich also nicht zurückbildet und keine Umgebungsluft einsaugt und sich andererseits bei weggenommener Verschlusskappe nicht von selbst flach legt und dadurch den Inhalt auspresst.

Zur Herstellung eines solchen Tubenbehälters werden an einem rechteckig zugeschnittenen Stück aus Verbundwerkstoff parallel zu den Seitenkanten wenigstens zwei Pressrillen angebracht, die bei der fertigen Tube als Sollfaltlinien dienen. Anschliessend wird das Stück aus Verbundwerkstoff zu einem Rohr geformt und die Seitenkanten überlappend so miteinander verschweisst, dass die beiden Pressrillen sich symmetrisch zur Rohrachse erstrecken. Anschliessend wird das Schulterstück 4 mit der Entnahmeöffnung 5 und der Verschlusskappe 7 an einer Stirnseite des Rohres in dieses eingesiegelt. Die andere Stirnseite des Rohres bleibt für die Einfüllung des Produkts offen. Der so gefertigte Tubenbehälter wird auf einer Abfüllmaschine durch die offene Stirnseite hindurch befüllt. Dann wird der gefüllte Tubenbehälter an der dem Schulterstück 4 gegenüberliegenden offenen Ende so zusammengepresst, d.h. flach gedrückt und versiegelt, dass an jedem Ende des dadurch entstandenen Siegelstreifens eine Pressrille endigt.

Alternativ dazu kann das Schulterstück 4 ohne Verschlusskappe an der einen Stirnseite des Zylinders eingesiegelt und der so gefertigte Tubenbehälter auf der dem Schulterstück gegenüberliegenden offenen Seite zusammengepresst und versiegelt werden. Der so gefertigte Tubenbehälter wird anschliessend auf einer Abfüllmaschine durch die offene Entnahmeöffnung befüllt und nachher mit einer Verschlusskappe verschlossen.

Zum portionenweise Entnehmen des Inhalts aus einem solchen Tubenbehälter wird dieser nach dem Abschrauben der Verschlusskappe mit nach unten gerichteter Entnahmeöffnung von oben her zusammengedrückt, so dass das Füllgut austritt.

Es müssen daher die als Faltlinien dienenden Pressrillen so bemessen und angebracht werden, dass die Hülle einerseits nach dem Aufhören des Zusammendrückens nicht in die Ausgangslage zurückfedert und dass die Hülle andererseits nicht dazu neigt, sich wie ein Flachbeutel zu verhalten, also von selbst von der zylindrischen Form in eine flache Form überzugehen. Dazu werden die Pressrillen so bemessen und angebracht, dass der Tubenkörper sich nach dem Aufhören des Auspressdruckes sich nicht von selbst weiter- oder zurückverformt, sondern in seiner gepressten Form stabil bleibt.

Die Pressrillen 3 werden im Verbundmaterial durch an sich bekannte Pressung erzeugt. Je nach der Stärke des Materials und den vom Inhalt her gegebenen Anforderungen können, wie in Fig. 2 gezeigt, verschiedene Formen von Pressrillen erzeugt werden. Es zeigen a, b und c unterbrochene Pressformrillen mit unterschiedlicher Breite und Länge, d und e durchgehende Doppelrillen und f eine Kombination.

## Patentansprüche

1. Deformierbarer Tubenbehälter (1) mit einer rohrförmigen Hülle (2), die am einen Ende eine Stirnwand mit einer Entnahmeöffnung (5) für halbflüssige und pastöse Produkte und am anderen Ende einen flachen Siegelstreifen aufweist, **dadurch gekennzeichnet, dass** er aus einem Verbundmaterial aus beidseits mit Kunststofffolien überzogenem Karton besteht und mit zwei Pressrillen (3) versehen ist, von dessen sich jede vom einen Ende des Siegelstreifens entlang einer Mantellinie der Hülle erstreckt und als Sollfaltlinie dient.

2. Verfahren zur Herstellung eines Tubenbehälters nach Anspruch 1, **dadurch gekennzeichnet, dass** an einem zugeschnittenen Verbundwerkstoffstück parallel zu den Seitenkanten zwei Pressrillen (3) als Sollfaltlinien angebracht werden, das Verbundwerkstoffstück zu einer rohrförmigen Hülle geformt wird und die einander zugewandten Kanten so miteinander verschweisst werden, dass die beiden Sollfaltlinien eine zur Hüllenachse symmetrische Lage aufweisen, dass ein Schulterstück (4) mit einer Entnahmeöffnung (5) an einer Stirnseite der Hülle (2) eingesiegelt wird und die andere Stirnseite durch Zusammenpressen so flach gedrückt und versiegelt wird, dass von jedem Ende des Siegelstreifens eine Presslinie ausgeht.

3. Verfahren nach Anspruch 2, **dadurch gekennzeichnet, dass** der Tubenbehälter nach dem Einsiegeln des mit einer Verschlusskappe (7) versehenen Schulterstücks am gegenüber befindlichen Ende gefüllt und dann dieses Ende verschlossen wird.

4. Verfahren nach Anspruch 2, **dadurch gekennzeichnet, dass** der Tubenbehälter nach dem Einsiegeln eines nicht verschlossenen Schulterstücks am gegenüberliegenden Ende verschlossen und dann durch das Schulterstück hindurch gefüllt wird.
